# EUROPÄISCHE PATENTSCHRIFT

(11) **EP 2 687 758 B1**
(45) Veröffentlichungstag und Bekanntmachung des Hinweises auf die Patenterteilung: **03.01.2018**
(21) Anmeldenummer: 13172992.3
(22) Anmeldetag: 20.06.2013
(51) Int. Cl.: F16H 57/04, F03B 3/00

(54) **Getriebeanordnung mit Schmiermittelabsaugung**
Gear assembly with lubricant extraction
Agencement d'engrenage avec aspiration de lubrifiant

(30) Priorität: 19.07.2012 AT 8102012
(43) Veröffentlichungstag der Anmeldung: 22.01.2014
(73) Patentinhaber: Eisenbeiss GmbH, 4470 Enns (AT)
(72) Erfinder: Stross, Wolfgang, 4470 Enns (AT)
(74) Vertreter: KLIMENT & HENHAPEL

(56) Entgegenhaltungen:
- EP-A2- 2 278 191
- DE-A1-102008 043 301
- JP-A- 2001 241 373

## Beschreibung

Die Erfindung betrifft eine Anordnung mit einer Turbine, die über ein Getriebe einen Generator antreibt, und mit einem Schmierkreis zur Versorgung des Getriebes mit Schmiermittel, wobei der Schmierkreis eine erste Schmiermittelpumpe aufweist, die in einem ersten Betriebszustand des Schmierkreises Schmiermittel über den Schmierkreis zu Verschleiß ausgesetzten Bauteilen des Turbinengetriebes fördert.

Eine Schmiermittelpumpe, deren Antrieb unabhängig vom Betriebszustand des Getriebes ist, wird auch Hilfspumpe oder Anfahrpumpe genannt. Eine derartige Hilfspumpe ist, insbesondere bei Wasserturbinen, vorgesehen, bei denen sprunghaft großer Druck auf Getriebeteile durch die Turbine ausgeübt wird. Bei Getrieben für Wasserturbinen und dergleichen würde das Anfahren des Getriebes viele Getriebeteile, etwa die Lager, zu sehr beanspruchen, sodass eine gesondert elektrisch angetriebene, und daher vom Betriebszustand des Getriebes unabhängige Schmiermittelpumpe vorgesehen ist, die die kritischen Teile des Getriebes schmiert. Nach dem Anfahren des Getriebes und sobald die mechanische Schmierung eingesetzt hat, wird diese Hilfs-bzw. Anfahrpumpe ausgeschaltet. In manchen Anwendungsfällen wie zum Beispiel bei Getrieben von Pit-Turbinen bereitet die Ölentleerung große Probleme, da die Getriebe im Schacht eingebaut sind und die Ölablaufschraube nur schwer zugänglich ist. Nach Wartungsplan muss das Getriebeöl aber regelmäßig abgelassen werden. Dies ist dann nur möglich, indem der Schaulochdeckel abgeschraubt und das Öl von oben her mittels Saugschlauch abgesaugt wird. Diese Methode ist weder praktikabel noch zuverlässig. Auch bei anderen Turbinengetrieben sind die Ölablassschrauben oftmals unzugänglich und für das Absaugen des Schmiermittels müssen zusätzliche Pumpen extern bereitgestellt und angeschlossen werden.
Die JP 2001 241373 wird als nächstkommender Stand der Technik betrachtet, da sie eine Anordnung mit einer Turbine beschreibt, die über ein Getriebe einen Generator antreibt, und mit einem Schmierkreis zur Versorgung des Getriebes versehen ist. In der EP 2278191 und der DE 10 2008 043301 wird jeweils die Verwendung einer Entleerpumpe, um Schmiermittel aus einem Schmierkreis zu entfernen, beschrieben, allerdings wird eine solche Vorgangsweise lediglich im Kraftfahrzeugbereich vorgeschlagen.

Das Ziel der Erfindung besteht darin, für eine Anordnung mit Turbine, die über ein Getriebe einen Generator antreibt, eine Lösung bereitzustellen, die das Entfernen des Schmiermittels aus dem Getriebe oder dem Schmierkreis erleichtert und zeitlich verkürzt. Eine entsprechende Anordnung soll kostengünstig und mit geringem Konstruktionsaufwand zu verwirklichen sein.

Dieses Ziel wird mit einer Anordnung nach Anspruch 1 erreicht. Der große Vorteil der Erfindung besteht darin, dass die bereits im Schmierkreis baulich integrierte erste Schmiermittelpumpe unabhängig vom Betriebszustand des Getriebes ist und nicht nur als Anfahrpumpe, sondern auch als Entleerpumpe eingesetzt wird. Zusätzliche Pumpen für das Absaugen des Schmiermittels sind daher nicht notwendig. Die nicht vom Getriebe sondern von einem gesonderten Motor, bevorzugt Elektromotor, angetriebene erste Schmiermittelpumpe kann dabei auch bei ruhendem Getriebe in Betrieb gesetzt werden. Des Weiteren erfolgt die Entleerung über den Schmierkreis mithilfe eines Auslasses des Schmierkreises, sodass auch hierfür keine zusätzlichen baulichen Maßnahmen erforderlich sind. Die Erfindung stellt somit eine kostengünstige Lösung dar, da alle Einrichtungen bereits vorhanden sind und die Anfahrpumpe, wie noch näher erläutert wird, mit einer Zweitfunktion als Entleerpumpe versehen wird. Vorzugsweise handelt es sich bei der Kombination der Turbine mit dem Getriebe um eine Pit-Turbine. Bevorzugt weist der Schmierkreis ein Ventil mit zumindest zwei Ventilstellungen auf, wobei eine erste Ventilstellung, in der der Auslass geschlossen ist, dem ersten Betriebszustand des Schmierkreises entspricht und eine zweite Ventilstellung, in der der Auslass geöffnet ist, dem zweiten Betriebszustand des Schmierkreises entspricht.
Dies stellt eine besonders einfache Verwirklichung der Erfindung dar. Es ist lediglich ein Ventil in die Druckleitung der Anfahrpumpe einzubauen. Dieses kann manuell betätigt und/oder mit einer entsprechenden Steuerung versehen sein. Die erste Ventilstellung entspricht dabei der "Anfahrposition", in der die erste Schmiermittelpumpe als Anfahrpumpe das noch nicht oder gerade erst angefahrene Getriebe schmiert. Die zweite Ventilstellung entspricht der "Entleerposition", in der das Schmiermittel aus dem Getriebe und dem Schmierkreis herausgepumpt wird. Der Auslass kann in Form einer Öffnung, einer Abzweigung, einer Leitung oder eines Beginns einer Leitung ausgebildet sein. Wenn der Auslass geschlossen ist, bedeutet dies, dass kein Schmiermittel über den Auslass nach außen entweichen kann. Bei geöffnetem Auslass kann Schmiermittel durch die ansonsten als Anfahrpumpe wirkende erste Schmiermittelpumpe über den Auslass herausgefördert werden.
Bevorzugt ist das Ventil ein 3/2-Wege Ventil, vorzugsweise in Form eines Kugelhahns. Dies stellt eine besonders einfache und zuverlässige Variante dar, bei der verhindert wird, dass in der ersten Ventilstellung Schmiermittel aus dem Schmierkreis entweichen kann (Auslass ist vom Schmierkreis dichtend getrennt) und dass in der zweiten Ventilstellung Schmiermittel in Richtung Getriebe gepumpt wird (Abschnitt des Schmierkreises stromabwärts des Ventils ist dichtend vom Abschnitt zwischen erster Schmiermittelpumpe und Ventil abgetrennt).
Ein 3/2-Wegeventil umfasst 3 Anschlüsse und 2 Ventilstellungen. Einer der Anschlüsse entspricht dem Auslass, während die anderen beiden Anschlüsse des Ventils zwei aufeinander folgende Abschnitte des Schmierkreises miteinander verbinden. Bevorzugt trennt das Ventil in der zweiten Ventilstellung die aufeinander folgenden Abschnitte des Schmierkreises, wodurch eine Rückführung des Schmiermittels in Richtung Getriebe unterbunden wird. Bevorzugt ist das Ventil in Pumprichtung stromaufwärts der ersten Schmiermittelpumpe angeordnet, wodurch sich eine effiziente Pumpwirkung beim Entleeren des Schmierkreises ergibt.
Bevorzugt ist das Ventil ohne Zwischenschaltung hydraulischer Bauelemente unmittelbar nach der ersten Schmiermittelpumpe geschaltet, d.h. zwischen erster Schmiermittelpumpe und Ventil sind im Schmierkreis keine weiteren hydraulischen Bauelemente vorhanden. Das Schmiermittel kann so unmittelbar nach der ersten Schmiermittelpumpe aus dem Schmierkreis entfernt werden, ohne weite Wege im Schmierkreis zurückzulegen.
Bevorzugt ist dem Ventil eine Steuereinrichtung zugeordnet, die das Ventil steuern bzw. umschalten kann und/oder Ventilstellungen auslesen und in Abhängigkeit davon Steuersignale an andere Komponenten der Anordnung bzw. eines Kraftwerkes mit einer derartigen Anordnung übermitteln kann. Dies ermöglicht eine Optimierung der Betriebssicherheit.
Bevorzugt umfasst das Ventil einen Ventilstellungssensor zur Erfassung der Ventilstellung und ist die Steuereinrichtung ausgebildet, um bei der zweiten Ventilstellung ein Steuersignal zu generieren, das ein Anlaufen des Getriebes verhindert. Dadurch wird ein Anfahren während des Entleerens zuverlässig verhindert.
Bevorzugt ist das Ventil durch die Steuereinrichtung zwischen den Ventilstellungen schaltbar. Automatisch kann das Ventil von der "Anfahrposition" in die "Entleerposition" umgeschaltet werden. Das Vorsehen einer Steuereinrichtung erlaubt die Integration von Kontroll- und Sicherheitsroutinen.
Bevorzugt ist die Steuereinrichtung ausgebildet, um bei angefahrenem Turbinengetriebe das Ventil in der ersten Ventilstellung zu halten. Diese elektronische Sperre ist eine Sicherheitsmaßnahme, um eine Entleerung von Schmiermittel während des Anfahrens des Getriebes zu verhindern.
Bevorzugt weist der Schmierkreis eine zweite Schmiermittelpumpe auf, die mit dem Getriebe mechanisch gekoppelt und durch dieses angetrieben ist. Sobald das Getriebe angefahren ist, übernimmt diese zweite Schmiermittelpumpe die Schmierung des Getriebes und die erste, unabhängig vom Getriebe antreibbare Schmiermittelpumpe (Anfahrpumpe) kann wieder abgeschaltet werden.
Dies stellt neben dem ersten und zweiten Betriebszustand einen dritten Betriebszustand des Schmierkreises dar, in dem lediglich die zweite, vom Getriebe mechanisch angetriebene Schmiermittelpumpe für die Schmierung des Getriebes sorgt. Bevorzugt sind die Schmiermittelpumpen im Schmierkreis parallel geschaltet. Die Pumpwirkung jeder einzelnen Schmiermittelpumpe wird dadurch erhöht. Der Schmierkreis teilt sich dabei entlang eines Abschnitts in einen ersten Strang und einen zweiten, zum ersten Strang parallel verlaufenden Strang, wobei die erste Schmiermittelpumpe im ersten Strang integriert ist und die zweite Schmiermittelpumpe im zweiten Strang integriert ist.

Bevorzugt ist das Ventil im selben Strang integriert, in dem auch die erste Schmiermittelpumpe integriert ist. Das Ventil ist somit im ersten Strang zwischen der ersten Schmiermittelpumpe und der Stelle, an der sich die beiden parallel verlaufenden Stränge wieder vereinen, geschaltet. Die Pumpleistung der ersten Schmiermittelpumpe kann dadurch optimal ausgenutzt werden, da das Schmiermittel nicht durch andere Abschnitte des Schmierkreises (Filter, Kühler, Heizung, etc.) gepumpt werden muss. Bevorzugt ist zwischen dem Ventil und jener Stelle, an der sich die beiden parallel verlaufenden Stränge wieder vereinen, ein Rückschlagventil vorgesehen, das verhindert, dass während des Betriebs der zweiten Schmiermittelpumpe das Ventil und/oder die erste Schmiermittelpumpe mit überhöhtem Druck beaufschlagt wird/werden. Dadurch wird die Sicherheit während des Betriebs der Turbine zuverlässig gewährleistet.
Im Folgenden wird eine bevorzugte Ausführungsform der Erfindung anhand der Zeichnung näher beschrieben. Dabei zeigt
Fig. 1 einen Ausschnitt der Anordnung einer erfindungsgemäßen Getriebeanordnung in der Nähe einer Turbine,
Fig. 2 eine erfindungsgemäße Getriebeanordnung in Form eines Schaltschemas,

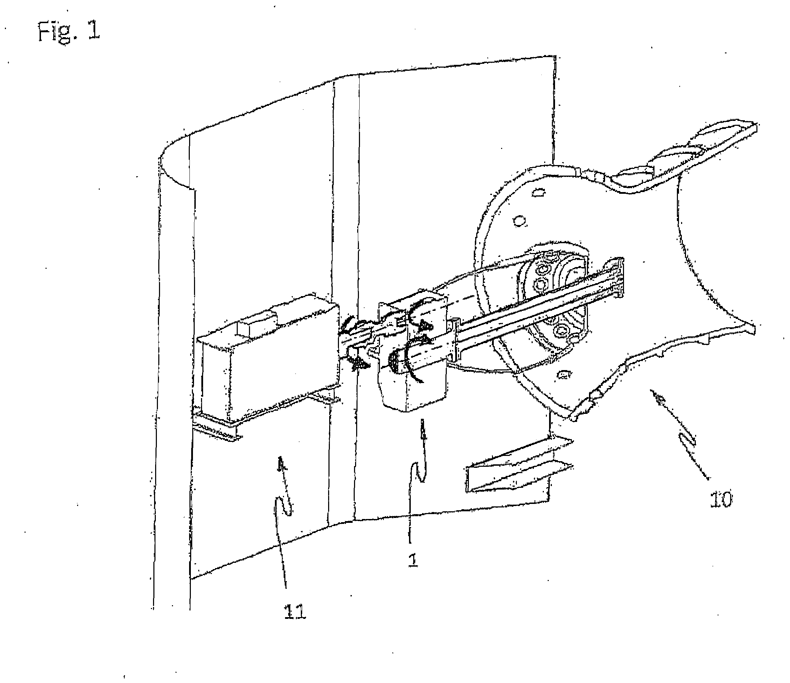

Fig. 1 zeigt eine Turbine 10, eine Getriebeanordnung 1 und einen Generator 11 eines Kraftwerks, z.B. eines Wasserkraftwerks.

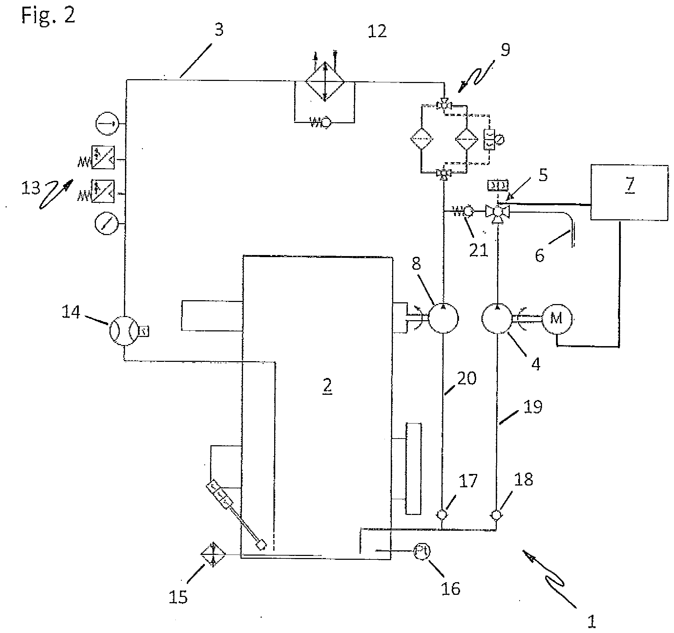

Fig. 2 zeigt das Schaltschema einer erfindungsgemäßen Getriebeanordnung 1 mit einem Turbinengetriebe 2 und einem integrierten Schmierkreis 3 zur Versorgung des Turbinengetriebes 2 mit Schmiermittel, insbesondere Getriebeöl.
Im Schmierkreis 3 ist eine erste, von einem elektrisch betriebenen Motor angetriebene Schmiermittelpumpe 4 integriert. Die erste Schmiermittelpumpe 4 besitzt somit einen vom Betriebszustand des Turbinengetriebes 2 unabhängigen Antrieb und kann auch im Ruhezustand des Getriebes in Betrieb gesetzt werden, um vor dem Anfahren der Turbine bzw. des Turbinengetriebes eine Schmierung mit bereits vorgewärmtem Schmiermittel zu gewährleisten. In diesem ersten Betriebszustand wirkt diese erste Schmiermittelpumpe 4 als Anfahrpumpe.
Der Schmierkreis 3 umfasst des Weiteren einen Auslass 6 zum Entfernen des Schmiermittels aus dem Schmierkreis 3. Während des ersten Betriebszustandes ist der Auslass 6 durch eine erste Ventilstellung des Ventils 5 geschlossen. Das Ventil 5, das in Pumprichtung stromaufwärts der ersten Schmiermittelpumpe 4 angeordnet ist, bindet den Auslass 6 in den Schmierkreis 3 ein.
Im dargestellten Ausführungsbeispiel ist das Ventil 5 ein 3/2-Wege Ventil, vorzugsweise in Form eines Kugelhahns.
Aus dem ersten Betriebszustand, in dem die erste Schmiermittelpumpe 4 Schmiermittel über den Schmierkreis 3 zu Verschleiß ausgesetzten Bauteilen (z.B. Lager, Zahnräder, oder allgemein gegeneinander bewegliche Teile) des Turbinengetriebes 2 fördert (in Fig. 2 gegen den Uhrzeigersinn), kann der Schmierkreis 3 in einen zweiten Betriebszustand gebracht werden, in dem dieselbe Schmiermittelpumpe 4, die im ersten Betriebszustand Schmiermittel zu Verschleiß ausgesetzten Bauteilen des Turbinengetriebes 2 fördert, Schmiermittel aus dem Schmierkreis 3 über den Auslass 6 nach außen fördert.
Zu diesem Zweck wird im vorliegenden Beispiel das Ventil 5 ausseiner ersten Ventilstellung, in der der Auslass 6 geschlossen ist, in eine zweite Ventilstellung gebracht, in der der Auslass 6 geöffnet ist. Das Betätigen der ersten Schmiermittelpumpe 4 bewirkt, dass das Schmiermittel nun nicht mehr in das Turbinengetriebe 2 rückgeführt wird, sondern über den Auslass 6 aus dem Schmierkreis 3 heraus gefördert wird.
Im dargestellten Ausführungsbeispiel wirkt das Ventil 5 mit einer Steuereinrichtung 7 zusammen. Die Steuereinrichtung 7 kann mehrere Funktionen wahrnehmen und mit der Turbinensteuerung (nicht dargestellt) zusammenwirken oder in dieser integriert sein. Das Ventil 5 wird vorzugsweise durch die Steuereinrichtung 7 angesteuert. Vorzugsweise ist die Steuereinrichtung 7 dazu ausgebildet, um bei angefahrenem Turbinengetriebe 2 das Ventil 5 in der ersten Ventilstellung zu halten.
Alternativ oder zusätzlich kann das Ventil 5 einen Ventilstellungssensor zur Erfassung der Ventilstellung umfassen und die Steuereinrichtung 7dazu ausgebildet sein, um bei der zweiten Ventilstellung ein Steuersignal zu generieren, das ein Anlaufen des Turbinengetriebes 2 bzw. der Turbine verhindert.

Wie in Fig. 2 dargestellt wirkt die Steuereinrichtung 7 auch mit der ersten Schmiermittelpumpe 4 zusammen. Das Umschalten zwischen den einzelnen Betriebszuständen kann dabei automatisch erfolgen.

Im Schmierkreis 3 ist eine zweite Schmiermittelpumpe 8 integriert, die mit dem Turbinengetriebe 2 mechanisch gekoppelt und durch dieses angetrieben ist. Sobald das Turbinengetriebe 2 angelaufen ist, schmiert sich das Turbinengetriebe selbsttätig über den Schmierkreis 3. Das selbsttätige Schmieren stellt einen dritten Betriebszustand des Schmierkreises 3 dar. Die erste Schmiermittelpumpe 4 kann nach dem Anfahren des Turbinengetriebes 2 ausgeschaltet werden. Die Schmiermittelpumpen 4, 8 sind im Schmierkreis 3 parallel geschaltet und können gleichzeitig oder jeweils einzeln in Betrieb sein.

Der Schmierkreis 3 teilt sich in einem Abschnitt in zwei parallel verlaufende Stränge 19, 20. In einem dieser Stränge 19 ist die erste Schmiermittelpumpe 4 angeordnet, und im anderen Strang 20 ist die zweite Schmiermittelpumpe 8 angeordnet. Wie im bevorzugten Ausführungsbeispiel zu sehen, ist das Ventil 5, das den Auslass 6 in den Schmierkreis 3 einbindet, im selben Strang 19 integriert, in dem auch die erste Schmiermittelpumpe 4 angeordnet ist. Zwischen dem Ventil 5 und jener Stelle, an der sich die beiden parallel verlaufenden Stränge 19, 20 wieder zu einem Strang vereinen, ist ein Rückschlagventil 21 vorgesehen, das verhindert, dass während des dritten Betriebszustandes das Ventil 5 und/oder die erste Schmiermittelpumpe 4 mit Druck beaufschlagt wird.

Neben den bereits beschriebenen hydraulischen Bauelementen umfasst der in Fig. 2 dargestellte Schmierkreis 3 zusätzlich eine Filteranordnung 9 zum Reinigen des Schmiermittels, eine Kühlereinrichtung 12 zum Kühlen des Schmiermittels, eine Drucküberwachungseinrichtung 13 mit eingangsseitigem und ausgangsseitigem Manometer, ein Volumenstrommessgerät 14, eine Heizung 15 und einen Temperatursensor 16 im Bereich der zu schmierenden Bauteile des Turbinengetriebes 2, sowie Rückschlagventile 17 und 18, die jeweils einen Rückfluss aus den parallelen Strängen 19, 20, in denen jeweils die Schmiermittelpumpen 4, 8 integriert sind, in Richtung Turbinengetriebe 2 verhindern. Diese Bauteile und deren Anordnung sind für die Erfindung von untergeordneter Bedeutung und optional.

Die Erfindung ist nicht auf die oben beschriebenen Ausführungsformen beschränkt. Beispielsweise kann die erste Schmiermittelpumpe derart ausgebildet sein, dass die von ihr bewirkte Pumprichtung umkehrbar ist. Dies erlaubt alternative Anordnungen des Ventils 5 und des Auslasses 6.

Grundsätzlich eignet sich die erfindungsgemäße Lösung für jedes Getriebe, das eine Anfahr- bzw. Hilfspumpe für den Getriebeanlauf aufweist. Diese wird demnach auch zum Absaugen des Getriebeöls verwendet. Durch einfaches Umschalten des Ventils kann das alte Getriebeöl über die Anfahr- bzw. Hilfspumpe abgesaugt und nicht, wie sonst im Normalbetrieb, in das Schmiersystem des Getriebes rückgeleitet werden. Dadurch erfolgt die Ölentleerung in einfacher und zuverlässiger Weise.

Die Positionserkennung des Ventils, vorzugsweise 3/2-Wege-Kugelhahnes,wird bevorzugt, da bei einer Stellung, die nicht der Schmierstellung entspricht, ein Anlaufen des Getriebes (bzw. der Turbine) verhindert werden muss.

Die Erfindung erleichtert somit ein leichtes und rasches Entfernen des Schmiermittels aus dem Turbinengetriebe oder dem Schmierkreis. Eine entsprechende Getriebeanordnung mit Turbinengetriebe und Schmierkreis ist außerdem kostengünstig und mit geringem Konstruktionsaufwand zu verwirklichen.

## Patentansprüche

1. Anordnung mit einer Turbine (10), die über ein Getriebe (2) einen Generator (11) antreibt, und mit einem Schmierkreis (3) zur Versorgung des Getriebes (2) mit Schmiermittel, wobei der Schmierkreis (3) eine erste Schmiermittelpumpe (4) aufweist, die in einem ersten Betriebszustand des Schmierkreises (3) Schmiermittel über den Schmierkreis (3) zu Verschleiß ausgesetzten Bauteilen des Getriebes (2) fördert, **dadurch gekennzeichnet, dass** der Antrieb der ersten Schmiermittelpumpe (4) unabhängig vom Betriebszustand des Getriebes (2) ist und dass der Schmierkreis (3) einen Auslass (6) aufweist, über den in einem zweiten Betriebszustand des Schmierkreises (3) mithilfe einer Entleerpumpe Schmiermittel aus dem Schmierkreis (3) entfernbar ist, wobei es sich bei der Entleerpumpe um die erste Schmiermittelpumpe (4) handelt.

2. Anordnung nach Anspruch 1, **dadurch gekennzeichnet, dass** der Schmierkreis (3) ein Ventil (5) mit zumindest zwei Ventilstellungen aufweist, wobei eine erste Ventilstellung, in der der Auslass (6) geschlossen ist, dem ersten Betriebszustand des Schmierkreises (3) entspricht, und eine zweite Ventilstellung, in der der Auslass (6) geöffnet ist, dem zweiten Betriebszustand des Schmierkreises (3) entspricht.

3. Anordnung nach Anspruch 2, **dadurch gekennzeichnet, dass** das Ventil (5) ein 3/2-Wege Ventil ist, vorzugsweise in Form eines Kugelhahns.

4. Anordnung nach Anspruch 2 oder 3, **dadurch gekennzeichnet, dass** das Ventil (5) in Pumprichtung stromaufwärts der ersten Schmiermittelpumpe (4) angeordnet ist.

5. Anordnung nach Anspruch 4, **dadurch gekennzeichnet, dass** das Ventil (5) ohne Zwischenschaltung hydraulischer Bauelemente unmittelbar nach der ersten Schmiermittelpumpe (4) geschaltet ist.

6. Anordnung nach einem der Ansprüche 2 bis 5, **dadurch gekennzeichnet, dass** dem Ventil (5) eine Steuereinrichtung (7) zugeordnet ist.

7. Anordnung nach Anspruch 6, **dadurch gekennzeichnet, dass** das Ventil (5) einen Ventilstellungssensor zur Erfassung der Ventilstellung umfasst und die Steuereinrichtung (7) ausgebildet ist, um bei der zweiten Ventilstellung ein Steuersignal zu generieren, das ein Anlaufen des Turbinengetriebes (2) verhindert.

8. Anordnung nach Anspruch 6 oder 7, **dadurch gekennzeichnet, dass** das Ventil (5) durch die Steuereinrichtung (7) zwischen den Ventilstellungen schaltbar ist.

9. Anordnung nach einem der Ansprüche 6 bis 8, **dadurch gekennzeichnet, dass** die Steuereinrichtung (7) ausgebildet ist, um bei angefahrenem Turbinengetriebe (2) das Ventil (5) in der ersten Ventilstellung zu halten.

10. Anordnung nach einem der Ansprüche 1 bis 10, **dadurch gekennzeichnet, dass** der Schmierkreis (3) eine zweite Schmiermittelpumpe (8) aufweist, die mit dem Getriebe (2) mechanisch gekoppelt und durch dieses angetrieben ist.

11. Anordnung nach Anspruch 10, **dadurch gekennzeichnet, dass** sich der Schmierkreis (3) entlang eines Abschnitts in einen ersten Strang (19) und einen zweiten, zum ersten Strang (19) parallel verlaufenden Strang (20) teilt, wobei die erste Schmiermittelpumpe (4) im ersten Strang (19) integriert ist und die zweite Schmiermittelpumpe (8) im zweiten Strang (20) integriert ist.

12. Anordnung nach Anspruch 11, **dadurch gekennzeichnet, dass** das Ventil (5) im ersten Strang (19) zwischen der ersten Schmiermittelpumpe (4) und der Stelle, an der sich die beiden parallel verlaufenden Stränge (19, 20) wieder vereinen, geschaltet ist.

13. Anordnung nach Anspruch 12, **dadurch gekennzeichnet, dass** zwischen dem Ventil (5) und der Stelle, an der sich die beiden parallel verlaufenden Stränge (19, 20) wieder vereinen, ein Rückschlagventil (21) vorgesehen ist, das verhindert, dass während des Betriebs der zweiten Schmiermittelpumpe (8) das Ventil (5) und/oder die erste Schmiermittelpumpe (4) mit überhöhtem Druck beaufschlagt wird/werden.

## Claims

1. An arrangement comprising a turbine (10), which drives a generator (11) via a transmission (2), and comprising a lubrication circuit (3) for supplying the transmission (2) with lubricant, wherein the lubrication circuit (3) has a first lubricant pump (4), which, in a first operating mode of the lubrication circuit (3), conveys lubricant via the lubrication circuit (3) to components of the transmission (2) subject to wear, **characterized in that** the drive of the first lubricant pump (4) is independent of the operating mode of the transmission (2), and the lubrication circuit (3) has an outlet (6), via which, in a second operating mode of the lubrication circuit (3), lubricant is removable from the lubrication circuit (3) with the aid of an emptying pump, wherein the emptying pump is the first lubricant pump (4).

2. The arrangement according to Claim 1, **characterized in that** the lubrication circuit (3) has a valve (5) having at least two valve positions, wherein a first valve position, in which the outlet (6) is closed, corresponds to the first operating mode of the lubrication circuit (3), and a second valve position, in which the outlet (6) is open, corresponds to the second operating mode of the lubrication circuit (3).

3. The arrangement according to Claim 2, **characterized in that** the valve (5) is a 3/2-way valve, preferably in the form of a ball valve.

4. The arrangement according to Claim 2 or 3, **characterized in that** the valve (5) is arranged upstream of the first lubricant pump (4) in the pumping direction.

5. The arrangement according to Claim 4, **characterized in that** the valve (5) is connected directly after the first lubricant pump (4) without interconnection of hydraulic components.

6. The arrangement according to any one of Claims 2 to 5, **characterized in that** a control unit (7) is associated with the valve (5).

7. The arrangement according to Claim 6, **characterized in that** the valve (5) comprises a valve position sensor for detecting the valve position and the control unit (7) is designed to generate a control signal which prevents a startup of the turbine transmission (2) in the second valve position.

8. The arrangement according to Claim 6 or 7, **characterized in that** the valve (5) is switchable by the control unit (7) between the valve positions.

9. The arrangement according to any one of Claims 6 to 8, **characterized in that** the control unit (7) is designed to keep the valve (5) in the first valve position when the turbine transmission (2) has been started.

10. The arrangement according to any one of Claims 1 to 10, **characterized in that** the lubrication circuit (3) has a second lubricant pump (8), which is mechanically coupled to the transmission (2) and is driven thereby.

11. The arrangement according to Claim 10, **characterized in that** the lubrication circuit (3) is divided along one section into a first strand (19) and a second strand (20), extending in parallel to the first strand (19), wherein the first lubricant pump (4) is integrated into the first strand (19) and the second lubricant pump (8) is integrated into the second strand (20).

12. The arrangement according to Claim 11, **characterized in that** the valve (5) is connected in the first strand (19) between the first lubricant pump (4) and the point at which the two strands (19, 20) extending in parallel unify again.

13. The arrangement according to Claim 12, **characterized in that**, between the valve (5) and the point at which the two strands (19, 20) extending in parallel unify again, a check valve (21) is provided, which prevents overelevated pressure from being applied to the valve (5) and/or the first lubricant pump (4) during the operation of the second lubricant pump (8).

## Revendications

1. Disposition avec une turbine (10) qui entraîne un générateur (11) par l'intermédiaire d'un engrenage (2) et avec un circuit de lubrification (3) destiné à alimenter l'engrenage (2) en lubrifiant, le circuit de lubrification (3) présentant une première pompe à lubrifiant (4) qui achemine du lubrifiant via le circuit de lubrification (3), dans un premier état de fonctionnement du circuit de lubrification (3), vers des composants de l'engrenage (2) exposés à l'usure, **caractérisée en ce que** l'entraînement de la première pompe à lubrifiant (4) est indépendant de l'état de fonctionnement de l'engrenage (2) et **en ce que** le circuit de lubrification (3) présente une sortie (6) par laquelle, dans un deuxième état de fonctionnement du circuit de lubrification (3), du lubrifiant peut être retiré du circuit de lubrification (3) à l'aide d'une pompe de vidange, la pompe de vidange étant la première pompe à lubrifiant (4).

2. Disposition selon la revendication 1, **caractérisée en ce que** le circuit de lubrification (3) présente une vanne (5) avec au moins deux positions de vanne, une première position de la vanne, dans laquelle la sortie (6) est fermée, correspondant au premier état de fonctionnement du circuit de lubrification (3) et une deuxième position de la vanne, dans laquelle la sortie (6) est ouverte, correspondant au deuxième état de fonctionnement du circuit de lubrification (3).

3. Disposition selon la revendication 2, **caractérisée en ce que** la vanne (5) est une vanne à 3/2 voies, de préférence une vanne à boisseau sphérique.

4. Disposition selon la revendication 2 ou 3, **caractérisée en ce que** la vanne (5) est disposée en amont de la première pompe à lubrifiant (4) dans le sens du pompage.

5. Disposition selon la revendication 4, **caractérisée en ce que** la vanne (5) est montée immédiatement après la première pompe à lubrifiant (4), sans éléments hydrauliques intercalés.

6. Disposition selon l'une des revendications 2 à 5, **caractérisée en ce que** la vanne (5) est associée à une installation de régulation (7).

7. Disposition selon la revendication 6, **caractérisée en ce que** la vanne (5) comprend un capteur de position de la vanne destiné à détecter la position de la vanne et l'installation de régulation (7) est conçue pour générer, dans la deuxième position de la vanne, un signal de commande qui empêche le démarrage de l'engrenage de la turbine (2).

8. Disposition selon la revendication 6 ou 7, **caractérisée en ce que** la vanne (5) peut être manoeuvrée entre ses positions par l'installation de régulation (7).

9. Disposition selon l'une des revendications 6 à 8, **caractérisée en ce que** l'installation de régulation (7) est conformée pour maintenir la vanne (5) dans sa première position quand l'engrenage de turbine (2) a démarré.

10. Disposition selon l'une des revendications 1 à 10, **caractérisée en ce que** le circuit de lubrification (3) comprend une deuxième pompe à lubrifiant (8) qui est couplée mécaniquement avec l'engrenage (2) et entraînée par celui-ci.

11. Disposition selon la revendication 10, **caractérisée en ce que** le circuit de lubrification (3) se partage sur une section en une première branche (19) et une deuxième branche (20) parallèle à la première branche (19), la première pompe à lubrifiant (4) étant intégrée dans la première branche (19) et la deuxième pompe à lubrifiant (8) étant intégrée dans la deuxième branche (20).

12. Disposition selon la revendication 11, **caractérisée en ce que** la vanne (5) est montée dans la première branche (19) entre la première pompe à lubrifiant (4) et le point où les deux branches parallèles (19, 20) se réunissent.

13. Disposition selon la revendication 12, **caractérisée en ce qu'**il est prévu entre la vanne (5) et le point où les deux branches parallèles (19, 20) se réunissent un clapet antiretour (21) qui empêche que la vanne (5) et/ou la première pompe à lubrifiant (4) soient exposées à une pression excessive pendant le fonctionnement de la deuxième pompe à lubrifiant (8).
